(19) Europäisches Patentamt
European Patent Office
Office européen des brevets

(11) Publication number: 0 320 123 A2

# (12) EUROPEAN PATENT APPLICATION

(21) Application number: 88310611.4

(22) Date of filing: 10.11.88

(51) Int. Cl.4: C08F 10/00 , C08F 2/44 , C08F 4/64

(30) Priority: 13.11.87 US 120254

(43) Date of publication of application: 14.06.89 Bulletin 89/24

(84) Designated Contracting States: AT BE CH DE ES FR GB GR IT LI LU NL SE

(71) Applicant: SHELL OIL COMPANY
900, Louisiana
Houston Texas 77001(US)

(72) Inventor: Chatterjee, Ananda M.
14411 Locke Lane
Houston Texas 77077(US)
Inventor: Job, Robert C.
12126 Westmere
Houston Texas 77077(US)

(74) Representative: Myerscough, Philip Boyd et al
J.A.Kemp & Co. 14, South Square Gray's Inn
London, WC1R 5EU(GB)

## (54) Process for preparing stabilized olefin polymers.

(57) A process for preparing in-reactor stabilized alpha olefin polymers comprising sequentially adding to a polymerization reactor

(i) a alpha-olefin monomer,

(ii) a selectivity control agent and olefin polymerization cocatalyst, separately, as a mixture or at least partially complexed,

(iii) an olefin polymerization procatalyst,

(iv) an alkyl aluminum compound as source of an antioxidant, and

(v) an acid acceptor and polymerizing the monomer.

The resulting polymer product is effectively stabilized and need not be compounded, in a separate energy intensive step, with an antioxidant.

EP 0 320 123 A2

# PROCESS FOR PREPARING STABILIZED OLEFIN POLYMERS

This invention relates to a process for preparing in-reactor stabilized olefin polymers which do not need extrusion pelletization.

Processes for polymerizing alpha olefins are taught in US-A-4,414,132 and US-A-4,329,253. The present invention is an improvement on these and similar types of polymerization processes for alpha olefins. This improvement involves a change in the polymerization process such that the polymer products produced have improved thermo-oxidative stability.

The present invention is directed toward an improved process for stabilizing olefin polymers, in particular polypropylene, wherein a stabilizer is incorporated in the polymer during polymerization in the reactor. The resultant polymer can be directly sold to customers without further extrusion. The process can be used to prepare powder or alternatively granules of olefin polymer (especially polypropylene) containing stabilizer, the polymer particles having diameters of 1 to 5 mm.

Accordingly the invention provides a process for the preparation of an in-reactor stabilized alpha olefin polymer, which comprises sequentially adding to a polymerization reactor

(i) an alpha-olefin monomer,

(ii) a selectivity control agent and olefin polymerization cocatalyst, separately, as a mixture or at least partially complexed,

(iii)an olefin polymerization procatalyst,

(iv) an alkyl aluminum compound as source of an antioxidant, and

(v) an acid acceptor, and polymerizing the monomer.

The process of the invention for in-reactor stabilization of alpha-olefin polymers finds use in liquid phase olefin polymerization, such as LIPP (liquid propylene polymerization process), a gas phase fluidized or stirred bed polymerization process, and a solvent/slurry polymerization process.

The process of the invention provides a means for cheaply incorporating additives into polymers, without having to additionally compound the polymer with the additives using energy intensive mixers, such as extruders. The process has lower energy and capital cost requirements, compared to a conventional polymerization process and subsequent compounding, as with a single or twin screw extruder.

The present invention involves the use of a catalyst, such as a catalyst known as a Ziegler-Natta catalyst, or alternatively a high activity catalyst, such as those available from Shell Chemical Company known as "SHAC" (Registered Trade Mark) 103 and "SHAC" 201. Other catalysts are also contemplated for use in this invention. These catalysts may be supported catalysts.

Olefin polymerization catalysts usable in the present process comprise a procatalyst (usually a solid component comprising at least magnesium, titanium and a halogen, such as chlorine), and a cocatalyst, such as an organoaluminum compound. Compositions comprising these procatalysts and cocatalysts can also be referred to collectively as supported coordination catalysts. The activity and stereospecific performance of such compositions are generally improved by incorporating an electron donor (Lewis base) in the procatalyst, and/or by employing a third catalyst component, i.e. an electron donor, also known as a selectivity control agent. An electron donor may be complexed in whole or in part with the cocatalyst, or activating organoaluminum compound.

For convenience of reference, the solid titanium-containing constituent of such catalysts will be referred to hereinafter as "procatalyst", the organoaluminum compound, whether used separately or partially or totally complexed with an electron donor, will be referred to as "cocatalyst", and the primary electron donor compound, whether used separately or partially or totally complexed with the organoaluminum compound, will be referred to as the "selectivity control agent" (SCA).

The procatalyst will typically be a chemical combination of a magnesium halide, preferably magnesium chloride, a titanium chloride, generally in tetravalent form, and, as electron donor, an ester of an aromatic mono- or dicarboxylic acid, such as ethyl benzoate, ethyl p-toluate or a dialkylphthalate such as diisobutylphthalate, ethyl isobutylphthalate or diethylphthalate.

Preferred methods for preparing procatalysts are described in US-A-4,329,253; US-A-4,393,182; US-A-4,400,302; and US-A-4,414,132. These procatalysts are highly active and stereospecific. The typical manner of preparing such procatalysts involves the reaction of a magnesium compound, a halide of tetravalent titanium such as titanium tetrachloride and electron donor, optionally in the presence of a halohydrocarbon. It may not be necessary to use a halohydrocarbon in all situations. The resulting particles can then be contacted with additional quantities of a halide of tetravalent titanium, such as $TiCl_4$. The preparations for the procatalyst are completed by washing off excess halide of tetravalent titanium, for example using a light

hydrocarbon such as isooctane or isopentane, and drying.

Such procatalysts have excellent polymerization activity (polymer yield) and good stereospecific performance (isotactic content).

Preferred procatalysts include the following:

Group (I) comprises a solid component which has been obtained by halogenating a magnesium compound of the formula $MgR'R''$ wherein $R'$ is an alkoxy, alkyl carbonate or aryloxy group and $R''$ is an alkoxy, alkyl carbonate or aryloxy group or halogen, with a halide of tetravalent titanium and an electron donor, contacting the resulting halogenated product with a halide of tetravalent titanium, washing the resulting product to remove unreacted titanium compound and electron donor, contacting the halogenated product with a halide of tetravalent titanium, washing it in an inert solvent to remove unreacted titanium compound and recovering the solid product.

Group (II) comprises a solid component obtained by halogenating a magnesium compound of the formula $MgR'R''$, wherein $R'$ and $R''$ are as defined above,with a halide of tetravalent titanium, contacting the resulting halogenated product with a first electron donor and a second electron donor and then reacting the resulting halogenated product with a halide of tetravalent titanium.

Group (III) comprises (a) a reaction product of an organoaluminum compound and an electron donor, and (b) a solid component which has been obtained by halogenating a magnesium compound of the formula $MgR_1R_2$ wherein $R_1$ is an alkyl, aryl, alkoxy or aryloxy group and $R_2$ is an alkyl, aryl, alkoxy or aryloxy group or halogen, with a halide of tetravalent titanium in the presence of a halohydrocarbon, and contacting the halogenated product with a tetravalent titanium compound.

It is also contemplated that the procatalyst be a solid constituent containing titanium and magnesium in an atomic ratio of Ti:Mg of 0.005:1 to 3:1 obtained by contacting a solid reaction product comprising a magnesium chloride in which the atomic ratio of Cl:Mg is at least 1.5:1 and a titanium chloride with, as electron donor, an ether, ester, amine, phenol or phosphine, in an amount of 0.091 to 5 mole of electron donor per gram atom of magnesium.

The procatalyst may be disposed on at least one inert, preferably spherical, support, such as silica, alumina or magnesium silicate.

The organoaluminum compound to be employed as cocatalyst may be chosen from any of the known activators in olefin polymerization catalyst systems comprising a titanium halide but is most suitably free of halogens. While trialkylaluminum compounds, dialkylaluminum halides and dialkylaluminum alkoxides may be used, trialkylaluminum compounds are preferred, particularly those wherein each of the alkyl groups has 2 to 6 carbon atoms, e.g. triethylaluminum, tri-n-propylaluminum, triisobutylaluminum, triisopropylaluminum and dibutyl-n-amylaluminum. Additional specific examples of cocatalyst include diethylaluminum chloride (DEAC), ethyl aluminum dichloride and ethyl aluminum sesquichloride.

Suitable electron donors, which are used as selectivity control agents in combination with or reacted with an organoaluminum compound and which may also be used in the preparation of the solid catalyst component, include ethers, esters, ketones, phenols, amines, amides, imines, nitriles, phosphines, phosphites, stibines, arsines, phosphoramides and alcoholates. Suitable donors include those referred to in US-A-4,136,243 (or its equivalent GB-A-1,486,194) and in GB-A-1,554,340 (or its equivalent DE-A-2,729,126). Preferred donors are esters, particularly esters of carboxylic acids, preferably aromatic carboxylic acids, such as ethyl and methyl benzoate, ethyl p-methoxy-benzoate, methyl p-ethoxy-benzoate, ethyl p-ethoxy benzoate, ethyl acrylate, methyl methacrylate, ethyl acetate, dimethyl carbonate, dimethyl adipate, dihexyl fumarate, dibutyl maleate, ethyl-isopropyl oxalate, ethyl p-chloro-benzoate, hexyl p-amino benzoate, isopropyl naphthenate, methyl p-toluate, ethyl p-toluate, n-amyl toluate, ethyl cyclohexanoate and propyl pivalate, amines such as N,N,N′,N′-tetramethylethylene diamine, 1,2,4-trimethyl piperazine and 2,2,6,6-tetramethyl piperidine, and alkoxysilanes, such as diisobutyldimethoxy silane, diphenyl-dimethoxy silane and phenyl triethoxysilane. The donor used as selectivity control agent (SCA) in the catalyst may be the same as or different from any donor used in preparing the procatalyst. Preferred electron donors for use in preparing the procatalyst are ethyl benzoate and methyl p-toluate. A preferred selectivity control agent for use in the total catalyst system is ethyl anisate (ethyl p-methoxy-benzoate).

Preferred proportions of selectivity control agent, employed separately, mixed with, or at least partially complexed with, as cocatalyst, an organoaluminum compound, calculated as mol per mol aluminum compound are in the range from 0.1/1 to 1.0/1, particularly from 0.2/1 to 0.5/1.

Proportions of electron donor contained in the solid catalyst component, calculated as mol per mol of magnesium, are suitably in the range of from 0.01/1 to 10/1, e.g. from 0.05/1 to 10/1, preferably 0.1/1 to 5/1 and especially from 0.01/1 to 1/1.

Acid acceptors which may be used in the process of the present invention include metal salts of a fatty acid having from 8 to 28 carbon atoms and metal oxides. Suitable metal salts include calcium pelargonate

and calcium stearate, which are preferred, and zinc stearate. The metal oxide most preferred for use is zinc oxide, but calcium oxide and magnesium oxide may also be used. Other acid acceptors which may work include sodium benzoate and hydrotalcites (under suitable conditions).

The acid acceptor can be pretreated, for example by soaking it in an inert hydrocarban liquid, such as mineral oil, hexane, heptane or toluene before it is added to the polymerisation reactor.

The alkyl aluminum compound used as an antioxidant source in accordance with this invention can be referred to as an alkyl-aluminum-antioxidant (AAA). Suitable AAA compounds are of the formula $(R3)_nAl(AO)_{3-n}$, wherein $R_3$ is an alkyl group, AO is an antioxidant group and n is 1 or 2. The AAA compound can thus be either a monoalkyl or a dialkyl aluminum compound. IF the AAA is a monoalkyl aluminum compound the two antioxidant groups can be the same (AO) or different ($AO_1$ and $AO_2$). Preferably the alkyl group $R_3$ has 1 to 18 carbon atoms. The antioxidant group AO can be derived from such antioxidants as:
1,3,5-trimethyl-2,4,6-tris(3,5-di-tert-butyl-4-hydroxybenzyl)benzene; octadecyl 3-(3′,5′-di-tert-butyl-4′hydroxyphenyl)propionate; tetrakis[methylene (3,5-di-tert-butyl-4-hydroxyhydrocinnamate)]methane;
tris[3,5-di-t-butyl-4-hydroxybenzyl isocyanurate;
3,5-di-tert-butyl-4-hydroxyhydrocinnamic acid triester with 1,3,5-tris(2-hydroxyethyl)-s-triazine-2,4,6-(1H,3H,5H)trione;
1,3,5-tris(4-tert-butyl-3-hydroxy-2,6-dimethylbenzyl) 1,3,5-triazine-2,4,6-(1H,3H,5H)-trione;
bis-[3,3-bis(4′hydroxy-3′tert-butylphenyl)-butanoic acid]glycolester;
2,2′-methylene-bis-( 4-methyl-6-tertiary-butyl-phenol )-terephthalate; and
2,2-bis[4-(2-(3,5-di-tert-butyl-4-hydroxyhydrocinnamoyloxy)ethoxyphenyl]propane.

The chemical structures of AAA compounds which may be used in the process of the invention are as follows (wherein the symbol " + " indicates a tertiary butyl group):

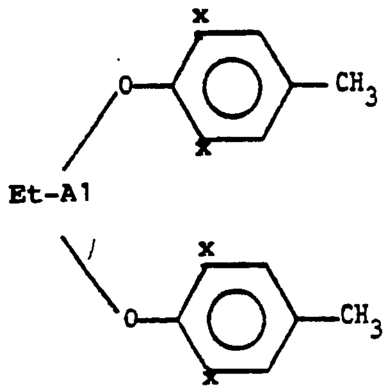

$[EtAl-(BHT)_2]$

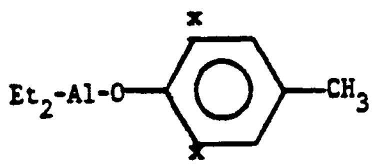

$(Et_2Al-BHT)$

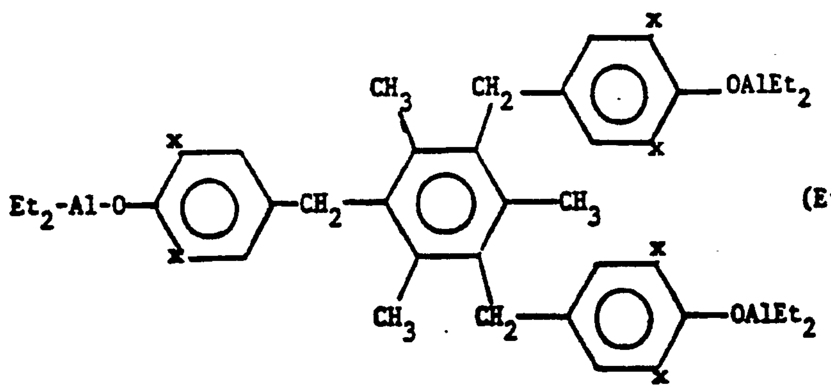

$(Et_2Al-330)$

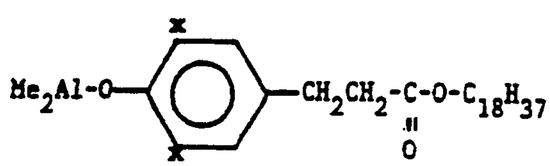

$(Me_2Al-376)$

Diethyl-aluminum butylated hydroxy-toluene ($Et_2Al$-BHT) is one of the most preferred AAA compounds usable within the scope of this invention.

It is possible to pretreat the pro-catalyst with cocatalyst to enhance the desired results of this invention. For example, the pro-catalyst may be pretreated with diethyl aluminum chloride.

Within the scope of the present invention, lubricant and mold release agents can be added to the reactor during polymerisation, preferably after the acid acceptor, to enhance the desired results. A suitable mold release agent is N,N′-ethylene-bis-stearamide.

The stabilising effect achieved in accordance with the present invention can be evaluated by oven aging and differential scanning calorimetry (DSC) oxidative induction time measurements. These measurements have confirmed the thermo-oxidative stability of an in-reactor stabilized polypropylene (PP).

Hot air oven aging was performed using a standard test procedure (ASTM D3012). A polypropylene sample was first compression-molded into 0.25mm (10 mil) thick specimens measuring 5 x 6.35 cm (2 x 2.5 inch) which were placed in a forced circulation oven. The samples were examined daily (except weekends).

Failure was indicated by characteristic powdery disintegration often at the corner of the plaque.

The oxidative induction time (OIT) measurements were conducted using a differential scanning calorimeter (Perkin-Elmer DSC-2A). About 5 mg of a compression-molded polypropylene plaque was used for this test. The sample was first heated at 10° c/minute under nitrogen up to the test temperature. When the test temperature was reached, the nitrogen was replaced by oxygen and the scanning was then set in the time mode. After the induction period, the sample underwent oxidation (exothermic peak). The oxidative induction time was determined from the intersection of the initial baseline with the tangent to the oxidation peak. The higher this OIT, the greater the stability of the polypropylene formulation.

Tests have revealed that the process of the invention can be used to prepare in-reactor stabilized polypropylene (PP) successfully incorporating antioxidants, such as Ethanox 330, available from Ethyl Corporation, butylated hydroxytoluene (BHT) and Ethanox 376, available from Ethyl Corporation, into the polymer.

Corrosivity tests can be performed as follows on a stabilized polymer. The corrosivity ratings are determined by a test method in which 30 gram polypropylene resin is melted in a glass cup and a mild steel disc, cooled by 18° C water, is held 1.3 cm above the polymer surface. The molten polymer is maintained at 260° C for 30 minutes, so that the disc is exposed to the vapors from the polypropylene melt. The disc is then visually examined, rinsed with acetone, and examined by a microscope for corrosion. The ratings range from A (no visible corrosion under 30X magnification) to F (very severe corrosion). C rating represents mild corrosion (visible to naked eye) in this accelerated test, and from field experience with customers has been found to be acceptable from the viewpoint of machine corrosion.

Xylene solubles of the resultant polymers can be determined as the percentage of material remaining soluble, when cooling a solution of polymer in xylene, from its boiling point to room temperature. No intermediate treatments to deactivate the catalyst or to purify the polymer by extraction are employed.

The following Examples and Comparative Examples will help to illustrate the process of the invention.

For LIPP polymerisations using ethyl benzoate-based catalysts (Examples 1-3), a 2.7 liter autoclave with a 6.35 (2.5 inch) paddle stirrer and a two slat baffle was charged with 2.71 propylene and 132 mmol hydrogen and then heated to 60° C whereupon 0.35 mmol ethyl p-ethoxybenzoate was injected followed closely by 0.70 mmol of triethylaluminum (TEA), followed by a 5% mineral oil slurry of procatalyst containing 0.01 mmol of Ti. After the initial exotherm the reactor temperature was held at 67 ° C for one hour. For phthalate ester-based catalysts (Examples 4 to 13 and Comparative Examples 1 to 3) the injection method was as follows: to a propylene/hydrogen mixture was injected a mixture of diphenyldimethoxysilane (DPDMS) and TEA, followed by procatalyst slurry, and polymerisation carried out for one hour at 67° C.

## EXAMPLES 1 to 3

Propylene was polymerised using, as AAA compound, diethyl-aluminum-butylated hydroxy toluene ($Et_2Al$-BHT) and a modified "SHAC" catalyst recipe using ethyl benzoate. Hydrogen was used as a chain transfer agent to control molecular weight. After the polymerisation, AAA released the antioxidant to achieve in-reactor stabilisation of the polymer. The amounts of AAA injected are shown in Table 1. Table 2 shows the OIT of the in-reactor stabilized polypropylene of Example 1 compared with that of an unstabilized polypropylene. The data in Table 1 show the incorporation of antioxidant in the polypropylene. As shown by Example 3 the yield of polypropylene was increased by using DEAC to pretreat the cocatalyst.

TABLE 1

| Example | Amount of AAA | Yield (kg PP/g.cat) | Stability of PP |
|---|---|---|---|
| 1 | 0.1 mmol | 4.2 | See Table 2 |
| 2 | 0.67 mmol | 14.3 | 0.09% BHT found in PP (by IR spectroscopy) |
| 3 [a)] | 0.67 mmol | 31.6 | Not measured |

(a) cocatalyst pretreated with 0.15 mmol of diethylaluminum chloride.

| TABLE 2 | |
|---|---|
| PP Sample | OIT (mins) at 170 °C |
| Example 1 | 8.5 |
| Unstabilized PP | 1.6 |

EXAMPLES 4 TO 12 AND Comparative Examples 1 to 3

Batch liquid propylene polymerisations were conducted using a 3.8 liter (one U.S. gallon) autoclave (2.7 liter propylene charge) at 67 °C for 1 hour with $MgCl_2/TiCl_4$/diisobutylphthalate procatalyst (2.7% Ti) and diphenyldimethoxysilane (DPDMS) as SCA.

The following injections were made sequentially to the reactor containing propylene for Examples 4 to 7: (a) mixture of triethyl aluminum (TEA) (1.4 mmole) and diphenyldimethoxysilane (as the selectivity control agent) (40 microliters), (b) procatalyst (0.35 ml in mineral oil); (c) alkyl-aluminum-antioxidant (AAA) in toluene solution and (d) ZnO (Kadox 25) acid acceptor slurried in mineral oil, such as Kaydol mineral oil. The ZnO became coated with mineral oil upon soaking it overnight.
The results are shown in Table 3.

In all cases, the polypropylene so produced was more stable than unstabilized polypropylene, with the exception that the BHT containing polypropylene (Examples 5 and 6) showed relatively low oven stability. This is expected, since BHT IS known to volatilize during the oven aging test. The BHT-containing samples showed evidence of stability when measured by the rapid Oxidative Induction Time (OIT) test (see Table 3). Apart from stability of the resulting product, the process using AAA provided catalyst productivity, selectivity (as measured by xylene solubles) and PP melt flow all generally in the commercially acceptable range.

The polypropylene produced using the process of the invention has generally higher corrosion resistance than unstabilized polypropylene.

TABLE 3 (a)

| Example | AAA used | MG (dg/min) | Kg PP/g catalyst | Xylene Solubles (w%) | Oven life (day) | | OIT (mins) at 190° C | Corrosivity |
|---|---|---|---|---|---|---|---|---|
| | | | | | 125° C | 150° C | | |
| 4 | $Et_2Al$-330 | 4.0 | 17.6 | 5.7 | > 34 | 7 | 11.3 | B |
| 5 | $EtAl$-$(BHT)_2$ | 0.73 | 10.8 | 5.4 | 3 | 1 | 2.5 | C+ |
| 6 | $Et_2Al$-BHT | - | 21.8 | 6.6 | 1 | 0.3 | 3.3 | D |
| 7 | $Me_2Al$-376 | 3.4 | 20.5 | 4.6 | - | - | 7.1 | C+ |
| Control | - | 0.50 | 21.7 | 4.3 | - | - | 1.3 | C-, D |
| Unstabilized "SHAC" PP powder | - | 5.1 | - | 3-4 | 2 | 0.3 | 1.1 | D |

(a) All the examples used 0.05 g ZnO (coated overnight with mineral oil) The Control had no acid acceptor or AAA, and represents a control "SHAC" run. Hydrogen level was 21 millimol for all runs.
(b) 0.087 g.
(c) 0.333 g.
(d) 0.416 g.
(e) 0.167 g.
(f) Xylene solubles test.
(g) Melt flow (MF) ratios of the polypropylene were measured by ASTM D1238 condition L.

Other polymerisation runs with AAA and other acid acceptors (calcium stearate and calcium pelargonate) have also been found successful.

Polymerisation with coated acid acceptors has been successful. The acid acceptor can be pretreated by soaking it in mineral oil before adding it to the reactor. Soaking should provide a temporary coating on the surface of the acid acceptor to minimize interaction with the catalyst until at least part way through polymerisation.

Three polymerisations (Comparative Examples 1 to 3) were attempted with the addition of neat Ethanox 330 antioxidant to the reactor. The data in Table 4 show that when neat Ethanox 330 was added to the reactor, the PP yield was zero, regardless of whether the Ethanox 330 and Ca pelargonate were pre-soaked in mineral oil.

When the Ethanox 330 was replaced by $Et_2Al$-330, as shown in Examples 8 and 9, PP was produced with good yield, good selectivity (evidenced by xylene solubles) and good stability. In Example 9, the Ca pelargonate (acid acceptor) was soaked overnight in mineral oil before addition to the reactor but in Example 8 a suspension of Ca pelargonate in mineral oil was directly injected into the reactor, without pre-soaking. The data show that the soaking of the Ca pelargonate has a positive effect on PP yield and stability. Comparative Example 4 is a control "SHAC" 201 catalyst polypropylene without any additives. Comparative Example 4 represents the benchmark stability of unstabilized PP via "SHAC" 201 catalyst.

Batch liquid propylene polymerisations were run in a 3.8 liter (one U.S. gallon) autoclave (2.7 liter propylene charge) at 67° C for one hour, with $MgCl_2/TiCl_4$/diisobutylphthalate procatalyst and DPDMS as SCA. The following injections were made sequentially to the reactor containing propylene: (1) mixture of TEA (1.4 mmole) and DPDMS (40 microliter), (2) 0.4 procatalyst in mineral oil, (3) AAA as toluene solution or neat AO (Ethanox 330) in mineral oil, and (4) acid acceptor in mineral oil.

TABLE 4

| | Eth. 330[a)] Soaked | AAA Used[b)] (gm) | Ca Pel Soaked[c)] | Kg.PP/g catalyst | XS[d)] (w%) | OIT (mins) at | | Oven life (days) at 125° C |
|---|---|---|---|---|---|---|---|---|
| | | | | | | 150° C | 190° C | |
| Comparative Example 1 | No | - | No | 0 | - | - | - | - |
| Comparative Example 2 | No | - | Yes | 0 | - | - | - | - |
| Comparative Example 3 | Yes | - | Yes | 0 | - | - | - | - |
| Example 8 | - | 0.221 | No | 23.8 | 3.7 | 22.7 | - | 0.6 |
| Example 9 | - | 0.221 | Yes | 27.1 | 5.1 | ≫24 | 24 | >170 |
| Comparative Example 4 | - | - | - | 21.7 | 4.3 | 9.9 | 1.3 | 1 |
| All runs were made with 1.4 mmol TEA and 21 mmol hydrogen. | | | | | | | | |

a)0.50 gm neat AO used.
b)$ET_2Al$-330.
c)0.25 gm used.
d)Xylene solubles test.

Table 5 shows results of polymerisation using extra additives. Examples 10 and 12 indicate good PP yield, stereoselectivity and oven stability. Example 12 is noteworthy, since in this run "Acrawax" C (N,N′-ethylene-bis-stearamide, a lubricant and mold release agent) was also injected into the reactor. The "Acrawax" C powder, like the ZnO, was soaked overnight in mineral oil before its injection into the reactor. Example 11 using hydrotalcite DHT-4A (Mg Al hydroxy carbonate hydrate) as acid acceptor gave low PP yield and very low stability.

Batch liquid propylene polymerisations were run in a 3.8 liter (one US gallon) autoclave (2.7 liter propylene charge) at 67° C for one hour, with $MgCl_2/TiCl_4$/diisobutylphthalate procatalyst and DPDMS as SCA. The following injections were made sequentially to the reactor containing propylene: (1) mixture of TEA (1.4 mmole) and DPDMS (40 microliter), (2) 0.4ml procatalyst in mineral oil, (3) AAA as toluene solution, and (4) acid acceptor and other additive in mineral oil.

| TABLE 5 | | | | | | |
|---|---|---|---|---|---|---|
| | AAA Used | Acid Acceptor | Kg.PP/g Catalyst | XS[e] (w%) | Oven Life (Day) at 125 °C | MF[f] |
| Example 10 | $Me_2Al$-376[a] | Ca St[c] | 27.6 | 3.8 | 13 | 4.2 |
| Example 11 | $Et_2Al$-330[b] | DHT4A[d] | 7.0 | 4.0 | 0.6 | - |
| Example 12 | $Et_2Al$-330[b] | ZnO[c] | 20.1 | 6.3 | >190 | <0.5 |
| Control | - | - | 24.4 | 4.5 | 1 | 0.9 |
| All polymerizations were run with 1.4 mmole TEA and 21 mmole hydrogen. The acid acceptors were soaked overnight with mineral oil before injection into the reactor.Example 12 included 0.25 gm Acrawax C. | | | | | | |

[a]0.167 gm
[b]0.221 gm
[c]0.2 gm
[d]0.25 gm
[e]Xylene solubles test.
[f]Melt flow (MF) ratios of the polypropylene were measured by ASTM D1238 condition L.

The alkyl-Al-antioxidant approach to in-reactor stabilization has thus been shown to be experimentally feasible at least for the system utilising a hindered phenolic antioxidant and acid acceptor, as judged by PP yield, stereoselectivity and thermo-oxidative stability.

## Claims

1. A process for the preparation of an in-reactor stabilized alpha olefin polymer, which comprises sequentially adding to a polymerization reactor

(i) an alpha-olefin monomer,

(ii) a selectivity control agent and olefin polymerization cocatalyst, separately, as a mixture or at least partially complexed,

(iii) an olefin polymerization procatalyst,

(iv) an alkyl aluminum compound as source of an antioxidant, and

(v) an acid acceptor, and polymerizing the monomer.

2. A process according to claim 1 wherein the alpha olefin is propylene.

3. A process according to claim 1 or 2, wherein the selectivity control agent is at least one aromatic carboxylic acid ester, alkoxy silane or hindered amine.

4. A process according to any one of the preceding claims wherein said cocatalyst is an organoaluminum compound selected from diethylaluminum chloride, ethylaluminum dichloride, ethylaluminum sesquichloride and triethyl aluminum.

5. A process according to any one of the preceding claims wherein the procatalyst is selected from (i) a solid component which has been obtained by halogenating a magnesium compound of the formula $MgR'R''$ wherein $R'$ is an alkoxy, alkylcarbonate or aryloxy group and $R''$ is an alkoxy, alkyl carbonate or aryloxy group or halogen, with a halide of tetravalent titanium and an electron donor, contacting the resulting halogenated product with a halide of tetravalent titanium, washing the resulting product to remove unreacted titanium compound and electron donor, contacting the halogenated product with a halide of tetravalent titanium, washing it in an inert solvent to remove unreacted titanium compound, and recovering the solid product, (ii) a solid component obtained by halogenating a magnesium compound of the formula $Mg R'R''$, wherein $R'$ and $R''$ are as defined herein, with a halide of tetravalent titanium, contacting the resulting halogenated product with a first electron donor and a second electron donor, and then reacting the resulting halogenated product with a halide of tetravalent titanium, (iii) a procatalyst comprising (a) a reaction product of an organoaluminum compound and an electron donor, and (b) a solid component which has been obtained by halogenating a magnesium compound of the formula $MgR_1R_2$, wherein $R_1$ is an alkyl, aryl, alkoxy or aryloxy group, and $R_2$ is an alkyl, aryl, alkoxy or aryloxy group or halogen, with a halide of tetravalent titanium in the presence of a halohydrocarbon, and contacting the halogenated product with a tetravalent titanium compound and (iv) a solid component containing titanium and magnesium in an atomic

ratio of Ti:Mg of 0.005:1 to 3:1 obtained by contacting a solid reaction product comprising a magnesium chloride in which the atomic ratio of Cl:Mg is at least 1.5:1 and a titanium chloride with, as electron donor, an ether, ester, amine, phenol or phosphine, in an amount of 0.091 to 5 mole of electron donor per gram atom of magnesium.

6. A process according to claim 5 wherein the procatalyst is disposed on at least one inert, preferably spherical, support selected from silica, alumina and magnesium silicate.

7. A process according to any one of the preceding claims wherein the procatalyst has been pretreated with diethyl aluminum chloride.

8. A process according to any one of the preceding claims wherein the alkyl aluminum compound used as source of antioxidant is of the formula $(R_3)_nA1(AO)_{3-n}$, wherein $R_3$ is an alkyl group, preferably of 1 to 18 carbon atoms, AO is an antioxidant group and n is 1 or 2.

9. A process according to claim 8 wherein AO is derived from an antioxidant selected from 1,3,5-trimethyl-2,4,6-tris (3,5-di-tert-butyl-4-hydroxy-benzyl)benzene; octadecyl 3-(3′,5′-di-tert-butyl-4′-hydroxyphenyl)propionate; tetrakis[methylene(3,5-di-tert-butyl-4-hydroxy hydrocinnamate)] methane; tris[3,5-di-t-butyl-4-hydroxybenzyl)isocyanurate; 3,5-di-tert-butyl-4-hydroxyhydrocinnamic acid triester with 1,3,5-tris(2-hydroxyethyl)-s-triazine-2,4,6 (1H,3H,5H)-trione; 1,3,5-tris(4-tert-butyl-3-hydroxy-2,6-dimethylbenzyl) 1,3,5-triazine-2,4,6-(1H,3H,5H)-trione; bis-[3,3-bis(4′hydroxy-3′tert-butyl-phenyl)-butanoic acid]glycolester; 2,2′-methylene-bis-(4-methyl-6-tertiary-butyl-phenol)-terephthalate; and 2,2-bis-[4-(2-(3,5-di-tert-butyl-4-hydroxyhydrocinnamoyloxy)ethoxyphenyl] propane.

10. A process according to any one of the preceding claims, wherein the acid acceptor is at least one metal salt of a fatty acid having from 8 to 28 carbon atoms or a metal oxide.